# EUROPÄISCHE PATENTSCHRIFT

(11) **EP 2 060 511 B1**
(45) Veröffentlichungstag und Bekanntmachung des Hinweises auf die Patenterteilung: **02.11.2011**
(21) Anmeldenummer: 07120610.6
(22) Anmeldetag: 13.11.2007
(51) Int. Cl.: B65G 1/10, A61J 7/00

(54) **Vorrichtung zum geordneten Lagern zylindrischer Behälter**
Device for the orderly storage of cylindrical containers
Dispositif de stockage ordonné de récipients cylindriques

(43) Veröffentlichungstag der Anmeldung: 20.05.2009
(73) Patentinhaber: Rowa Automatisierungssysteme GmbH, 53539 Kelberg (DE)
(72) Erfinder: Wagner, Rudolf M., 54550 Daun (DE)
(74) Vertreter: Zenz

(56) Entgegenhaltungen:
- EP-A- 0 254 487
- WO-A-01/05687
- DE-A1- 3 709 319
- DE-A1- 19 509 951
- US-A1- 2007 007 162

## Beschreibung

Die Erfindung betrifft eine Vorrichtung zum geordneten Lagern einer Vielzahl unterscheidbarer zylindrischer Behälter. Eine Vorrichtung gemäss dem Oberbegriff des Anspruchs 1 ist aus WO-A-01/05687 bekannt.

Eine Vorrichtung der eingangs genannten Art wird beispielsweise zum Lagern von in geschlossenen Kunststoff-Röhrchen enthaltenen homöopathischen Arzneimitteln benötigt, wie sie beispielsweise in Frankreich verwendet werden. Eine Vielzahl unterschiedlicher homöopathischer Arzneimittel befinden sich hier in Kunststoff-Röhrchen, die üblicherweise in verschiedenen Größen vorhanden sind, beispielsweise in zwei verschiedenen Größen. Herkömmlicherweise werden derartige homöopathische Arzneimittel-Röhrchen in Schubladen-Fächern gelagert, die eine Vielzahl von Facheinteilungen enthalten. Aufgrund der manuellen Einlagerung und Entnahme und der Vielzahl unterschiedlicher Wirkstoffe ist eine sichere Arbeitsweise beim Ein- und Auslagern nur mit einem sehr hohen Kontrollaufwand zu realisieren. Es besteht die Gefahr von Verwechslungen und somit einer falschen Medikation. Eine der Erfindung zu Grunde liegende Aufgabe besteht somit darin, die Gefahr von Verwechslungen und einer falschen Medikation dadurch zu verringern, dass die Einlagerung und Auslagerung derartiger Arzneimittel-Röhrchen mittels einer computerunterstützten Lagerhalterung mit automatischer Ein- und Auslagerung erfolgt.

Diese Aufgabe wird durch eine Vorrichtung zum geordneten Lagern einer Vielzahl unterscheidbarer zylindrischer Behälter mit den Merkmalen des Anspruchs 1 gelöst. Bei den zylindrischen Behältern handelt es sich vorzugsweise um die eingangs genannten Kunststoff-Röhrchen für homöopathische Arzneimittel. Die Vorrichtung ist aber ebenso geeignet für andere zylindrische Behälter, welche nicht auf kreiszylindrische Behälter beschränkt sind, sondern auch Behälter mit anderen Querschnitten umfassen, wobei die Behälter auch geringfügig von der zylindrischen Form abweichen können, das heißt ihr Querschnitt nicht über die gesamte Länge konstant zu sein braucht; die Behälter können beispielsweise auch Flaschen, Ampullen oder dergleichen sein, welche an einem Ende eine Verjüngung aufweisen. Die Behälter können aus einem beliebigen Material gefertigt sein und sowohl feste als auch flüssige Stoffe enthalten. Die Behälter sind unterscheidbar, das heißt von unterschiedlicher Art, insbesondere unterschiedlichen Inhalts, wobei die Art anhand einer Kennzeichnung der Behälter identifizierbar ist.

Die Vorrichtung zum geordneten Lagern einer Vielzahl derartiger Behälter weist einen Stapel von mehreren quer zu einer axialen Richtung und in der axialen Richtung benachbart angeordneten Lagerscheiben mit parallelen Stirnebenen auf, wobei jede Lagerscheibe eine Vielzahl von Lagerplätzen aufweist, wobei jeder Lagerplatz eine vorgegebene Lagerfläche zur Aufnahme jeweils eines Behälters aufweist. Die axiale Richtung kann beispielsweise senkrecht sein, so dass die Lagerscheiben übereinander gestapelt sind; sie kann aber auch beispielsweise waagerecht sein, so dass die Lagerscheiben nebeneinander angeordnet sind. Bei den parallelen Stirnebenen der Lagerscheiben handelt es sich um gedachte Begrenzungsebenen, die nicht zwangsläufig mit einer Oberfläche einer Wandung zusammenfallen müssen.

Die Lagerplätze in jeder Lagerscheibe sind in wenigstens eine Gruppe von Lagerplätzen aufgeteilt, wobei sämtliche Lagerplätze einer Gruppe die gleiche Lagerfläche aufweisen und entlang einer zu den Stirnebenen parallel verlaufenden Bewegungslinie benachbart angeordnet sind, wobei die Bewegungslinien sämtlicher Gruppen der Lagerscheibe parallel verlaufen, wobei jede Lagerscheibe derart parallel zu den Stirnebenen bewegbar ist, dass die Lagerplätze ihrer Gruppe(n) entlang der Bewegungslinie(n) verschoben werden. Die Lagerflächen der Lagerplätze einer Gruppe sind gleich, das heißt von näherungsweise gleicher Gestalt, wobei sie Behälter aufnehmen können, deren Maximalquerschnitt den der Lagerfläche nicht überschreitet. Vorzugsweise sind die Lagerflächen der Lagerplätze in ihrer Gestalt an die Querschnittsflächen der Behälter angepasst. Im einfachsten Fall enthält eine Lagerscheibe nur eine Gruppe von entlang einer beispielsweise kreisförmigen oder geraden Bewegungslinie angeordneten Lagerplätzen. Vorzugsweise sind jedoch mehrere Gruppen von Lagerplätzen entlang paralleler Bewegungslinien, beispielsweise entlang konzentrischer Kreise, benachbart innerhalb einer Lagerscheibe angeordnet. Die Bewegungslinien sämtlicher Gruppen jeder Lagerscheibe verlaufen parallel, was nicht zwangsläufig für die Bewegungslinien der Gruppen benachbarter Lagerscheiben der Fall sein muss.

Jede Lagerscheibe ist an einer oder beiden Stirnebenen von einer Begrenzungswand begrenzt. Begrenzungswand bedeutet hier, dass sie einen freien Durchtritt der Behälter verhindert. Die Begrenzungswand braucht aber nicht aus einer geschlossenen Materialplatte zu bestehen; sie kann beispielsweise auch gitterartig ausgebildet sein und/oder aus mehreren Segmenten bestehen. Insbesondere kann die Begrenzungswand auch aus zwei oder mehr übereinander gestapelten und relativ zueinander bewegbaren Platten oder Gittern bestehen. In jeder Begrenzungswand (gegebenenfalls mit Ausnahme einer am Ende des Stapels angeordneten Begrenzungswand) ist wenigstens eine Durchtrittsöffnung vorgesehen, die relativ zu der Lagerscheibe so positioniert werden kann, dass ein Behälter in der axialen Richtung durch die Begrenzungswand hindurch in einen an der Durchtrittsöffnung positionierten Lagerplatz einer Gruppe der Lagerscheibe hineinbewegt oder aus einem an der Durchtrittsöffnung positionierten Lagerplatz einer Gruppe der Lagerscheibe herausbewegt werden kann. Die Lagerscheiben und die Durchtrittsöffnungen können derart positioniert werden, dass ein Einlagerungspfad (d. h. eine Gasse) und/oder ein Auslagerungspfad gebildet wird, der sich von einer Stirnseite des Stapels durch wenigstens eine Durchtrittsöffnung wenigstens einer Begrenzungswand hindurch zu einem ausgewählten Lagerplatz in einer beliebigen Gruppe einer beliebigen Lagerscheibe beziehungsweise in umgekehrter Richtung erstreckt. In einer Begrenzungswand kann beispielsweise für jede Gruppe einer angrenzenden Lagerscheibe eine separate Durchtrittsöffnung vorgesehen sein; es kann aber auch lediglich eine Durchtrittsöffnung für sämtliche Gruppen vorgesehen sein. Die Durchtrittsöffnung kann quer zu den Bewegungslinien verschiebbar und/oder verschließbar sein. Durch entsprechendes Bewegen der Lagerscheiben und entsprechendes Positionieren der Durchtrittsöffnungen werden die Einlagerungs- und Auslagerungspfade von einer oder von beiden Stirnseiten des Stapels der Lagerscheiben her geschaffen.

Die Vorrichtung weist eine Steuereinrichtung auf, die mit einer Einrichtung zum Erfassen der Identität eines einzulagernden Behälters und mit Antrieben zum Bewegen der Lagerscheiben und zum Positionieren der Durchtrittsöffnungen der Begrenzungswände derart gekoppelt ist, dass die Steuereinrichtung einerseits mit Hilfe einer entsprechenden Ansteuerung der Antriebe den Ein- beziehungsweise den Auslagerungspfad vorgeben und andererseits erfassen und speichern kann, auf welchen Lagerplätzen welche Behälter gelagert sind, so dass durch eine von der Steuereinrichtung bewirkte Bildung des Einbeziehungsweise des Auslagerungspfads eine automatische Einbeziehungsweise Auslagerung eines Behälters möglich ist.

Die erfindungsgemäße Vorrichtung gestattet einen wahlfreien direkten Zugriff auf einzelne eingelagerte Behälter zum Zwecke der Auslagerung beziehungsweise einen wahlfreien direkten Zugriff auf leere Lagerplätze zum Zwecke der Einlagerung.

Nachdem die Identität eines einzulagernden Behälters von der Einrichtung zum Erfassen der Identität erfasst worden ist und die Steuereinrichtung durch entsprechendes Bewegen der Antriebe der Lagerscheiben und der Antriebe zum Positionieren der Durchtrittsöffnungen der Begrenzungswände einen Einlagerungspfad geschaffen hat, erfolgt eine gezielte Einlagerung des identifizierten Behälters in einen bestimmten Lagerplatz, wobei die Steuereinrichtung dann die Identität des Behälters in Zuordnung zu einer Identität des Lagerplatzes, beispielsweise gekennzeichnet durch eine Identifizierung der Lagerscheibe, eine Identifizierung der Gruppe innerhalb der Lagerscheibe und eine Identifizierung des Lagerplatzes innerhalb der Gruppe, erfasst und speichert. Nach dem Einlagern sind die Behälter-Identifikationen in Zuordnung zu den Identifikationen der Lagerplätze gespeichert. Soll ein bestimmter Behälter ausgelagert werden, so weiß die Steuereinrichtung, in welcher Lagerscheibe, welcher Gruppe und welchem Lagerplatz innerhalb der Gruppe sich der gewünschte Behälter befindet. Sie positioniert dann die Durchtrittsöffnungen der Begrenzungswände und die Lagerscheiben derart, dass zwischen einer Stirnseite des Stapels, zu der der gewünschte Behälter ausgelagert werden soll, und dem Behälter-Lagerplatz ein Pfad von Durchtrittsöffnungen und leeren Lagerplatz-Zylindern derart gebildet wird, dass der auszulagernde Behälter entlang dieses Auslagerungspfades bewegt werden kann. Sobald der Auslagerungspfad geschaffen ist, wird eine Bewegung des Behälters durch den Auslagerungspfad hindurch freigegeben oder durch einen Antrieb bewirkt.

Eine bevorzugte Ausführungsform der erfindungsgemäßen Vorrichtung ist **dadurch gekennzeichnet, dass** die Lagerscheiben die Form eines flachen geraden Kreiszylinders oder eines Segments eines solchen Kreiszylinders haben und um die Achse des Kreiszylinders drehbar oder schwenkbar sind, dass sämtliche Lagerplätze einer Gruppe entlang einer kreisförmigen, zur Zylinderachse konzentrischen Bewegungslinie benachbart angeordnet sind, so dass die Lagerplätze der Gruppe zumindest einen Teilkreisbogen eines Rings belegen, und dass in der Begrenzungswand wenigstens eine verschließbare oder radial verschiebbare Durchtrittsöffnung vorgesehen ist, durch welche ein Behälter in axialer Richtung in einem an der Durchtrittsöffnung positionierten Lagerplatz der Lagerscheibe oder aus einem an der Durchtrittsöffnung positionierten Lagerplatz der Lagerscheibe bewegt werden kann. Bei dieser Ausführungsform umfasst die Vorrichtung einen Stapel konzentrischer Kreiszylinderscheiben oder von Kreiszylindersegmenten. Die Behälter sind entlang konzentrischer Kreise in jeder Lagerscheibe angeordnet, wobei die konzentrischen Kreise der benachbart angeordneten Lagerscheiben in der axialen Richtung fluchten, so dass bei entsprechender Positionierung der Lagerscheiben relativ zueinander und einer entsprechenden Positionierung der Durchtrittsöffnungen zwischen den Lagerscheiben geradlinige, in axialer Richtung verlaufende Ein- beziehungsweise Auslagerungspfade gebildet werden. Die Verwendung der kreiszylindrischen Stapel gestattet eine relativ hohe Lagerdichte bei einfachen Drehantrieben.

Bei dieser bevorzugten Ausführungsform könnten die Lagerscheiben die Form eines Segments eines flachen geraden Kreiszylinders, beispielsweise eines Halbkreissegments haben. In diesem Fall sind die Halbkreissegmente beispielsweise um eine Drehachse, die der Achse des Kreiszylinders entspricht, derart schwenkbar angeordnet, dass sich die benachbarten Halbkreissegmente unterschiedlich überlappen können. Bei einer bevorzugten Ausführungsform haben die Lagerscheiben jedoch die Form eines flachen geraden Kreiszylinders und umfasst eine Gruppe jeweils einen vollständigen Ring von Lagerplätzen, wobei jeweils mindestens ein bestimmter oder ein beliebiger Lagerplatz als Durchtrittskanal freigehalten wird. Bei dieser Ausführungsform können die Lagerscheiben vollständig um ihre Achse rotieren. Ein derartiges Lager ist kompakt, weist eine hohe Lagerdichte auf und benötigte nur wenige Antriebe für die Rotation der einzelnen Lagerscheiben.

Eine bevorzugte Weiterbildung der kreiszylindrischen Anordnung ist **dadurch gekennzeichnet, dass** die Begrenzungswände jeweils wenigstens zwei relativ zueinander um die Zylinderachse drehbare Platten umfassen, wobei die Platten jeweils wenigstens eine Durchtrittsöffnung mit gleichem radialen Abstand von der Zylinderachse aufweisen, so dass wenigstens eine Durchtrittsöffnung in der Begrenzungswand verschließbar ist, indem die Platten einer Begrenzungswand relativ zueinander gedreht werden. Vorzugsweise umfasst jede Begrenzungswand eine feststehende Platte und eine drehbare Platte, wobei jede feststehende Platte beispielweise mit einer entlang einer radialen Linie an den Schnittpunkten zu den Bewegungslinien angeordneten Reihe von Durchtrittsöffnungen und jede drehbare Platte mit einer Reihe von in Umfangsrichtung versetzt und an den Schnittpunkten zu den Bewegungslinien angeordneten Durchtrittsöffnungen versehen ist. Bei dieser Ausführungsform beschränken sich die Antriebe auf Drehantriebe für die Lagerscheiben und Drehantriebe für die Platten der Begrenzungswände. In bestimmten Relativ-Drehpositionen der feststehenden und drehbaren Platte werden an bestimmten radialen Positionen Durchtrittsöffnungen freigegeben, die den Durchtritt von Behältern zu den benachbarten Gruppen gestatten.

Bei einer Ausführungsform der erfindungsgemäßen Vorrichtung ist die axiale Richtung die senkrechte Richtung, wobei jede Lagerscheibe an der unteren Stirnebene von einer Begrenzungswand begrenzt ist, so dass die eingelagerten Behälter auf der Begrenzungswand aufliegen. Vorzugsweise sind die Lagerscheiben und die Begrenzungswände so ausgebildet, dass ein aus einer Lagerscheibe auszulagernder Behälter nach dem Positionieren einer in der unter der Lagerscheibe angeordneten Begrenzungswand angeordneten Durchtrittsöffnung unter dem Lagerplatz des Behälters schwerkraftgetrieben nach unten austritt und in einen Lagerplatz einer darunter angeordneten Lagerscheibe fällt oder aus dem Stapel der Lagerscheiben nach unten austritt. Diese Ausführungsform verzichtet auf zusätzliche Antriebe zum Bewegen der Behälter. Einzulagernde Behälter werden einfach von der oberen Stirnseite des Stapels her in den gewünschten Lagerplatz fallen gelassen. Auszulagernde Behälter treten schwerkraftgetrieben nach unten aus dem Stapel aus. Die Einlagerung kann manuell in den Stapel erfolgen, wobei der Behälter in eine an der Oberseite des Stapels sichtbare Durchtrittsöffnung eingelegt wird. Unter dem Stapel kann sich eine Auffangvorrichtung, an die sich gegebenenfalls eine Transportvorrichtung anschließt, zum Auffangen und Weiterleiten der austretenden Behälter vorgesehen sein.

Bei einer anderen Ausführungsform mit einem senkrechten Stapel der Lagerscheiben sind ein oder mehrere in axialer Richtung bewegbare Stößel vorgesehen, wobei die unter den Lagerscheiben angeordneten Begrenzungswände so ausgebildet sind, dass die Stößel hindurch treten können; so dass ein aus einer Lagerscheibe auszulagernder Behälter nach dem Positionieren einer in der über der Lagerscheibe angeordneten Begrenzungswand angeordneten Durchtrittsöffnung über dem Lagerplatz des Behälters von einem von unten herangefahrenen Stößel getrieben nach oben austritt und in einen Lagerplatz einer darüber angeordneten Lagerscheibe eintritt oder aus dem Stapel nach oben austritt. Bei dieser Vorrichtung kann ein Stößel verwendet werden, der dann jeweils unter den auszulagernden Behälter positioniert wird, beispielsweise ein radial beweglicher Stößel in einer (axial beweglichen) Lagerscheibe. Es ist aber denkbar, dass mehrere bewegbare Stößel derart unter der untersten Lagerscheibe angeordnet sind, dass für jeden Lagerplatz innerhalb eines Auslagerbereichs der Lagerscheibe, beispielsweise für jeden Lagerplatz entlang einer radialen Linie ein separater Stößel vorgesehen ist.

Bei einer anderen Ausführungsform der erfindungsgemäßen Vorrichtung ist die axiale Richtung eine horizontale Richtung und ist jede Lagerscheibe beidseitig von einer Begrenzungswand begrenzt. Vorzugsweise sind bei dieser Vorrichtung ein oder mehrere in horizontaler Richtung bewegbare Stößel vorgesehen, die ausgehend von einer oder beiden Stirnseiten des Stapels in den Stapel hineinbewegt werden können. Die neben den Lagerscheiben angeordneten Begrenzungswände sind so ausgebildet, dass die Stößel hindurchtreten können, so dass ein aus einem Lagerplatz einer Lagerscheibe auszulagernder Behälter nach dem Positionieren einer (in einer neben der Lagerscheibe angeordneten Begrenzungswand angeordneten) Durchtrittsöffnung neben dem Lagerplatz des Behälters von einem waagerecht bewegten Stößel getrieben horizontal austritt und in einen Lagerplatz einer daneben angeordneten Lagerscheibe eintritt oder aus dem Stapel austritt. Vorzugsweise treten die Stößel durch Öffnungen in den Begrenzungswänden hindurch, deren Durchmesser kleiner als die der Behälter sind.

Bei einer weiteren Ausführungsform der erfindungsgemäßen Vorrichtung ist jeder Lagerplatz von einer sich über die gesamte Dicke der Lagerscheibe erstreckenden Wandung umgeben, die den Lagerplatz gegenüber benachbarten Lagerplätzen abgrenzt. Vorzugsweise sind die Wandungen der Lagerplätze derart geschlossen, dass sie einen axialen Strömungskanal für ein Gas, beispielsweise für Druckluft, bilden können. Die Wandungen sind beispielsweise Kreiszylinderwandungen, die sich über die gesamte Dicke der Lagerscheibe erstrecken. Die Begrenzungswände weisen dort, wo benachbart diejenigen Lagerplätze positioniert werden, aus denen ein Behälter ausgelagert oder in die ein Behälter eingelagert werden soll, Gasdurchtrittsöffnungen auf, wobei die Gasdurchtrittsöffnungen kleiner als die Durchtrittsöffnungen für die Behälter sind, so dass ein Gasstrom aus einem auf der einen Seite der Begrenzungswand positionieren Lagerplatz zu einem auf der anderen Seite positionierten Lagerplatz hindurchtreten kann, ohne dass ein gegebenenfalls enthaltener Behälter durchgelassen wird. Eine Vorrichtung zum Erzeugen eines Gasstroms (zum Beispiel Druckluftstroms) ist an einer oder an beiden Stirnseiten des Stapels vorgesehen, so dass ein aus einem Lagerplatz auszulagernder Behälter nach dem Positionieren einer Behälter-Durchtrittsöffnung neben dem Lagerplatz des Behälters von einem Gasstrom getrieben austreten und in einen Lagerplatz einer daneben angeordneten Lagerscheibe eintreten oder aus dem Stapel austreten kann. Beispielsweise wird in einer Richtung eingelagert und in der entgegengesetzten Richtung ausgelagert, so dass eine an einer ersten Stirnseite des Stapels angeordnete Vorrichtung zum Erzeugen eines Gasstroms der Einlagerung und eine zweite Vorrichtung zum Erzeugen eines Gasstroms, die an der entgegengesetzten Stirnseite angeordnet ist, zum Auslagern dient. Der Einlagerungspfad beziehungsweise der Auslagerungspfad wird geschaffen, indem die Lagerscheiben so gedreht oder bewegt werden, dass die Strömungskanäle der leeren Lagerplätze hintereinander angeordnet sind und in den Begrenzungswänden die Gasdurchtrittsöffnungen zentriert positioniert sind. Soll ein Behälter eingelagert werden, so werden ausgehend von der Einlagerungsstirnseite bis zu dem gewünschten Lagerplatz in den Begrenzungswänden Behälter-Durchtrittsöffnungen positioniert, während jenseits des Lagerplatzes bis zur entgegengesetzten Stirnseite des Stapels hin lediglich Gasdurchtrittsöffnungen positioniert werden. Nach dem Einlegen des Behälters an der einen Stirnseite und dem Erzeugen des Gasstroms wird der Behälter bis zu dem ersten Lagerplatz transportiert, bei dem stromab keine Behälter-Durchtrittsöffnung sondern lediglich eine Gasdurchtrittsöffnung positioniert ist. Dort wird der Behälter aufgefangen. Beim Auslagern eines Behälters können sämtliche Behälter-Durchtrittsöffnungen über die gesamte axiale Ausdehnung des Lagerscheibenstapels vor und hinter dem auszulagernden Behälter positioniert werden. Es können aber auch zwischen der Stirnseite, an der der Gasstrom eintritt, und der Lagerscheibe, in der sich der auszulagernde Behälter befindet, lediglich die Gasdurchtrittsöffnungen positioniert werden, so dass die Behälter-Durchtrittsöffnungen nur dort positioniert sind, wo der Auslagerungspfad gebildet werden soll.

Vorteilhafte und/oder bevorzugte Weiterbildungen der Erfindung sind in den Unteransprüchen gekennzeichnet.

Im Folgenden wird die Erfindung anhand von in der Zeichnung dargestellten bevorzugten Ausführungsbeispielen näher erläutert. In der Zeichnung zeigen:
Figur 1 eine schematische Draufsicht einer Lagerscheibe eines Ausführungsbeispiels der erfindungsgemäßen Vorrichtung zum geordneten Lagern;
Figur 2 eine schematische Seitenansicht der erfindungsgemäßen Vorrichtung zum geordneten Lagern mit vier übereinander gestapelten Lagerscheiben;
Figur 3 eine schematische Draufsicht auf ein Ausführungsbeispiel einer Begrenzungswand mit zwei übereinander liegenden, relativ zueinander drehbaren Platten;
Figur 4 eine schematische Draufsicht einer anderen Ausführungsform einer Begrenzungswand mit zwei relativ zueinander drehbaren, übereinander liegenden Platten; und
Figuren 5A und 5B eine schematische Draufsicht und eine Unteransicht einer weiteren Ausführungsform einer Begrenzungswand mit zwei relativ zueinander drehbaren Platten.

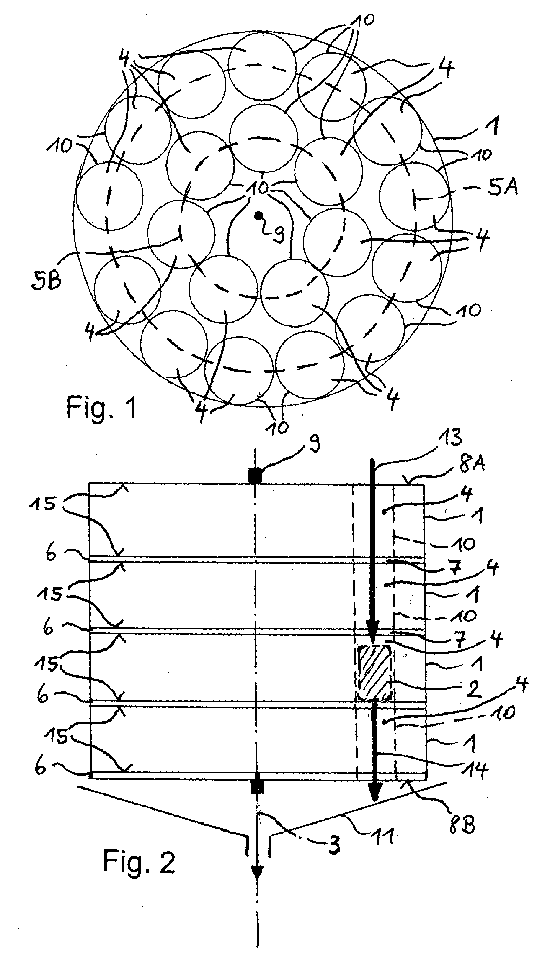

Figur 1 zeigt eine schematische Draufsicht auf eine Lagerscheibe 1 einer Ausführungsform der erfindungsgemäßen Vorrichtung zum geordneten Lagern einer Vielzahl unterscheidbarer zylindrischer Behälter. Die ebene Lagerscheibe, die bei der in Figur 1 gezeigten Ausführungsform kreisförmig ist, weist eine Vielzahl von Lagerplätzen 4 auf, wobei jeder Lagerplatz 4 einen zylindrischen Behälter aufnehmen kann. Bei der in Figur 1 dargestellten Ausführungsform haben die Lagerplätze eine kreisförmige Grundfläche und sind von Wandungen 10 begrenzt, die sich über die gesamte Höhe der Lagerscheibe 1 erstrecken. Bei anderen Ausführungsformen können die Lagerplätze 4 andere Querschnittsflächen haben und könnten Wandungen vorgesehen sein, die sich nicht über die gesamte Höhe der Lagerscheibe 1 erstrecken.

Die Lagerplätze 4 sind bei dem in Figur 1 dargestellten Ausführungsbeispiel in zwei Gruppen aufgeteilt, wobei die Lagerplätze 4 jeder Gruppe in einem zu einer Drehachse 9 der Lagerscheibe 1 konzentrischen Kreis angeordnet sind. So sind die Lagerplätze 4 einer radial außen angeordneten Gruppe entlang einer Linie 5A angeordnet, während die Lagerplätze 4 einer inneren konzentrischen Gruppe entlang der Linie 5B angeordnet sind. Wenn sich die Lagerscheibe 1 um die Drehachse 9 dreht, so bewegen sich die Lagerplätze 4 entlang der Linie 5A beziehungsweise der Linie 5B, weshalb diese Linien 5A, 5B hier als Bewegungslinien bezeichnet werden.

Figur 2 zeigt eine schematische Seitenansicht auf eine Ausführungsform der erfindungsgemäßen Vorrichtung zum geordneten Lagern einer Vielzahl zylindrischer Behälter. Bei der Ausführungsform gemäß Figur 2 sind vier Lagerscheiben 1 übereinander gestapelt und um eine gemeinsame Drehachse 9 drehbar. Die vier Lagerscheiben sind unabhängig voneinander drehbar. Jede Lagerscheibe weist eine vorgegebene Höhe auf, so dass sie von zueinander parallelen Stirnebenen 15 begrenzt wird. Unter jeder Lagerscheibe 1 ist jeweils eine Begrenzungswand 6 angeordnet, welche den Boden der Lagerplätze 4 der Lagerscheibe 1 und somit die Auflage für gegebenenfalls darin einliegende Behälter bildet. Auf der rechten Seite der Figur 2 sind schematisch durch eine gestrichelte Linie die Wandungen 10 von vier übereinander angeordneten Lagerplätzen 4 dargestellt. Zwischen den Lagerplätzen 4 übereinander angeordneter Lagerscheiben 1 befinden sich in den Begrenzungswänden 6 Durchtrittsöffnungen 7, so dass ein Behälter 2 beispielsweise entlang des Einlagerungspfades 13 von oben durch die Lagerplätze 4 der beiden obersten Lagerscheiben und die Durchtrittsöffnungen 7 unter der obersten und der nachfolgenden Lagerscheibe 1 hindurchtreten kann, bis er in den Lagerplatz 4 der dritten Lagerscheibe 1 von oben eintritt. In dieser Position ist der Behälter 2 dargestellt. Damit der Behälter 2 in dieser Position verbleibt, muss die Begrenzungswand 6 unter dem Lagerplatz 4 geschlossen sein. Um ein Auslagern des Behälters 2 aus der zweiten Lagerscheibe von unten entlang des Auslagerungspfades 14 zu ermöglichen, müssen Durchtrittsöffnungen in den unter der Lagerscheibe angeordneten Begrenzungswänden 6 erzeugt und ein leerer Lagerplatz 4 in der untersten Lagerscheibe 1 positioniert werden. Dann tritt der Behälter 2 entlang des Auslagerungspfades 14 nach unten aus dem Stapel aus, wobei er dort von einer in Figur 2 schematisch dargestellten Auffangeinrichtung 11 aufgefangen und zu einer Ausgabestelle transportiert wird.

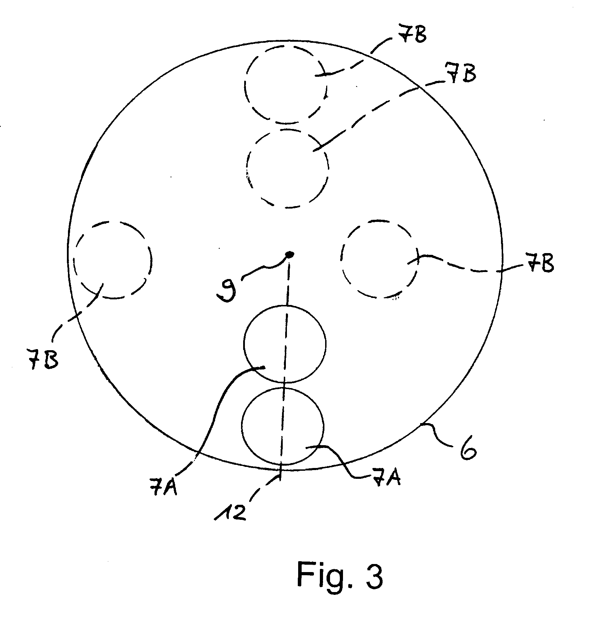

Figur 3 zeigt eine schematische Darstellung eines Ausführungsbeispiels einer Begrenzungswand 6, wie sie beispielsweise bei dem anhand der Figuren 1 und 2 beschriebenen Ausführungsbeispiel eingesetzt werden kann. Die unter einer Lagerscheibe angeordnete Begrenzungswand 6 besteht aus einer feststehenden kreisförmigen Platte und einer drehbaren kreisförmigen Platte. Die feststehende Platte, deren Oberseite in Figur 3 zu sehen ist, weist zwei Durchtrittsöffnungen 7A auf, die entlang einer radialen Linie 12 angeordnet sind. Die Mittelpunkte der Durchtrittsöffnungen 7A liegen auf einer auf die Begrenzungswand projizierten Bewegungslinie, das heißt die radial äußere Durchtrittsöffnung 7A unter der in Figur 1 dargestellten Bewegungslinie 5A und die radial innere Durchtrittsöffnung 7A unter der radial inneren Bewegungslinie 5B. Wird durch Drehen der darüber befindlichen Lagerscheibe 1 ein mit einem Behälter befüllter Lagerplatz 4 über der Durchtrittsöffnung 7A positioniert, so könnte der Behälter 2 nach unten durch die Durchtrittsöffnung 7A hindurchtreten, sofern auch die darunter liegende drehbare Platte der Begrenzungswand 6 eine Öffnung an der Stelle der oberen Durchtrittsöffnung 7A aufweisen würde. Damit dies ermöglicht wird, weist die untere Platte der Begrenzungswand 6 ebenfalls Durchtrittsöffnungen 7B auf, die in Figur 3 durch gestrichelte Linien angedeutet sind (wegen der darüber liegenden durchgehenden Platte sind die Ränder der Durchtrittsöffnungen 7B in Figur 3 nicht sichtbar). In Figur 3 ist eine Drehposition der drehbaren Platte gezeigt, bei der sämtliche Durchtrittsöffnungen 7B der drehbaren Platte unter einem durchgehenden Bereich der feststehenden Platte derart angeordnet sind, dass die Begrenzungswand 6 keine durchgehende Durchtrittsöffnungen aufweist. Wenn die drehbare Platte gedreht wird, so kann eine Durchtrittsöffnung 7B dieser Platte unter der radial äußeren oder der radial inneren oder unter beiden Durchtrittsöffnungen 7A der feststehenden Platte derart positioniert werden, dass eine durchgehende Durchtrittsöffnung 7 gebildet wird. Durch diese kann ein Behälter, der sich in einem Lagerplatz 4 über der Begrenzungswand 6 befindet, in die darunter liegende Lagerscheibe oder gegebenenfalls ganz aus dem Stapel der Lagerscheiben austreten. Damit ein Drehen der Lagerscheibe über den durch die untere Platte verschlossenen, aber dennoch eine der Materialdicke der oberen Platte entsprechende Tiefe aufweisenden Durchtrittsöffnungen 7A hinweg ermöglicht wird, sind die oberen Ränder der Durchtrittsöffnungen 7A gegebenenfalls mit einer Abschrägung versehen, so dass die in der sich drehenden Lagerscheibe gehaltenen Behälter darüber hinweggleiten können, ohne zu verkanten.

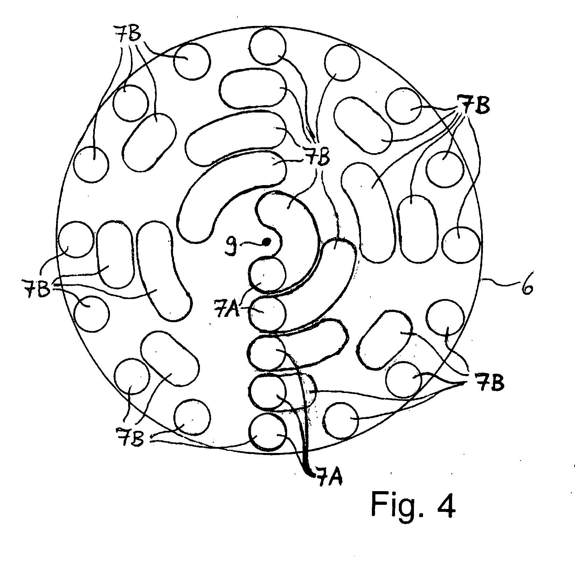

Figur 4 zeigte eine schematische Draufsicht auf eine Begrenzungswand 6 eines anderen Ausführungsbeispiels der erfindungsgemäßen Vorrichtung. Auch diese Ausführungsform wird - wie die Ausführungsform gemäß Figur 3 - bei einer Lagervorrichtung mit kreisförmigen Lagerscheiben mit in konzentrischen Kreisen angeordneten Gruppen von Lagerplätzen 4 verwendet und besteht aus zwei Platten, nämlich einer feststehenden Platte mit einer entlang einer radialen Linie angeordneten Reihe von Durchtrittsöffnungen 7A und einer sich drehenden Platte mit Durchtrittsöffnungen 7B. Figur 4 zeigt die Begrenzungswand 6, von unten, so dass die Durchtrittsöffnungen 7B der drehbaren Platte sichtbar sind. Dabei ist in Figur 4 eine relative Position zwischen der feststehenden Platte und der drehbaren Platte gezeigt, bei der sämtliche Durchtrittsöffnungen 7A durch die Durchtrittsöffnungen 7B hindurch sichtbar werden. Bei dem in Figur 4 dargestellten Ausführungsbeispiel weist die (nicht gezeigte) zugehörige Lagerscheibe fünf Gruppen von in konzentrischen Kreisen angeordneten Lagerplätzen auf. Die Besonderheit der Anordnung der Durchtrittsöffnungen 7B der drehbaren Platte der Begrenzungswand besteht darin, dass sie es in Abhängigkeit von der Drehposition gestattet, eine beliebige Kombination der fünf Durchtrittsöffnungen 7A der feststehenden Platte freizugeben oder zu sperren. Je nach Drehposition wird eine beliebige Durchtrittsöffnung oder werden zwei, drei, vier oder sämtliche Durchtrittsöffnungen in beliebiger Kombination freigegeben.

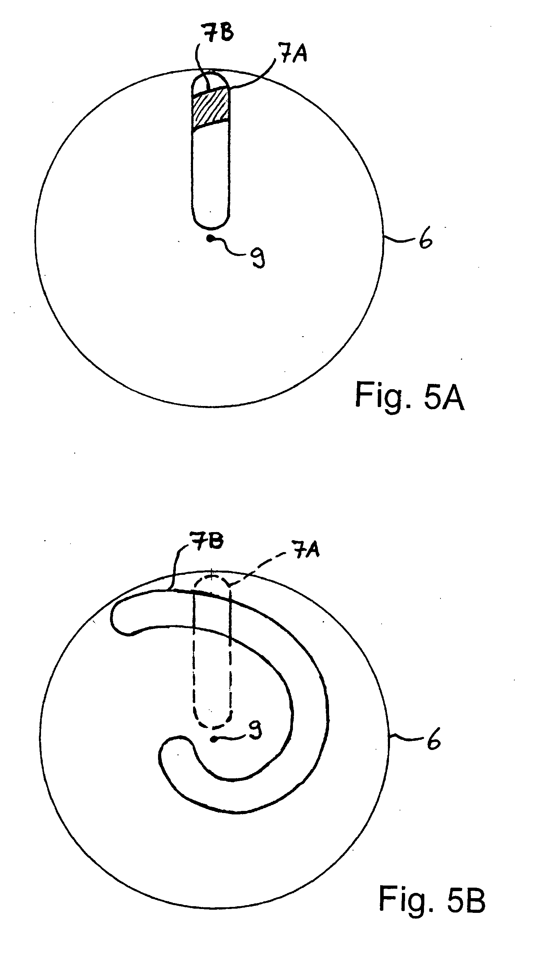

Figur 5A zeigt eine schematische Draufsicht auf eine Begrenzungswand 6 eines weiteren Ausführungsbeispiels der erfindungsgemäßen Vorrichtung. Diese Ausführungsform wird ebenfalls bei einer Lagervorrichtung mit kreisförmigen Lagerscheiben mit in konzentrischen Kreisen angeordneten Gruppen von Lagerplätzen verwendet und besteht aus zwei Platten, nämlich einer feststehenden Platte und einer sich drehenden Platte. Figur 5A zeigt die Draufsicht auf die feststehende Platte, die eine sich in radialer Richtung erstreckende Durchtrittsöffnung 7A aufweist. Durch die Durchtrittsöffnung 7A hindurch wird die darunter angeordnete sich drehende Platte sichtbar, die eine spiralförmige Durchtrittsöffnung 7B aufweist, wobei in der Durchtrittsöffnung 7A in Figur 5A ein Ausschnitt der Durchtrittsöffnung 7B sichtbar ist. Die durch die Überschneidung der Durchtrittsöffnungen 7A und 7B gebildete Durchtrittsöffnung der Begrenzungswand 6 ist in der schematischen Darstellung gemäß Figur 5A schraffiert dargestellt.

Figur 5B zeigt eine Unteransicht der in Figur 5A dargestellten Begrenzungswand, wobei hier die sich drehende Platte mit der Durchtrittsöffnung 7B sichtbar ist. Die Durchtrittsöffnung 7B hat eine spiralförmige Gestalt, so dass beim Drehen der drehbaren Platte eine sich in radialer Richtung verschiebende Durchtrittsöffnung der Begrenzungswand 6 ergibt. Die Durchtrittsöffnung 7A der feststehenden Platte ist in Figur 5B gestrichelt dargestellt, soweit sie von der sich drehenden Platte verdeckt ist.

Die in Figur 2 gezeigten vier übereinander angeordneten Lagerscheiben 1 weisen jeweils die gleiche Anordnung von Lagerplätzen auf, wie sie beispielsweise in Figur 1 dargestellt ist. Insbesondere sind die Bewegungslinien 5A und 5B der vier Lagerscheiben 1 in der axialen Richtung 3 genau übereinander positioniert, so dass durch relatives Drehen der Lagerscheiben 1 beliebige Lagerplätze 4 mit demselben radialen Abstand von der Drehachse übereinander angeordnet werden können. Um einen Durchtritt von Behältern durch eine Lagerscheibe 1 zu gestatten, muss wenigstens ein Lagerplatz 4 frei bleiben. Das Positionieren der Lagerscheiben und die Freigabe der Durchtrittsöffnungen erfolgt entweder mittels separater Antriebe für jede Lagerscheibe und jede Begrenzungswand oder (weniger vorteilhaft) mit einem einzigen Antrieb, der dann derart positioniert wird, dass er die jeweils zu drehende Lagerscheibe antreibt. Die Antriebe zum Drehen der Lagerscheiben können außen an die Lagerscheiben angreifen oder an die Drehachsen, wobei im letztgenannten Fall die verschiedenen Lagerscheiben konzentrische, ineinander geschachtelte Hohl-Drehachsen aufweisen können. Gleiches gilt für die Antriebe der drehbaren Platten der Begrenzungswände 6.

Damit die jeweilige Position der drehbaren Platten der Begrenzungswände und/oder der Lagerscheiben 1 erfasst werden kann, sind entweder Sensoren, die die jeweilige Drehposition erfassen, oder Servomotoren mit einer geeigneten Verfolgung des zurückgelegten Wegs vorgesehen, wobei in dem letztgenannten Fall ein Sensor für jede Lagerscheibe und/oder für jede drehbare Platte einer Begrenzungswand zum Erfassen eines Referenzpunkts vorgesehen sein kann.

Die in den Figuren nicht gezeigten Antriebe für die Lagerscheiben 1 oder die drehbaren Platten der Begrenzungswände 6 sind mit einer (ebenfalls nicht dargestellten) elektronischen Steuereinrichtung, beispielweise einem Computer, gekoppelt, die die jeweilige Stellung erfasst und verfolgt und die gewünschten Positionen einstellt. Die Steuereinrichtung ist darüber hinaus mit einer Vorrichtung zum Erfassen der Identität eines einzulagernden Behälters gekoppelt. Sofern jeder Behälter beispielsweise einen Barcode aufweist, der ihn beziehungsweise seinen Inhalt identifiziert, so könnte es sich bei der Einrichtung zum Erfassen der Identität um einen Barcode-Leser handeln. Wenn der Behälter mit einem RFID (Transponder) versehen ist, könnte die Einrichtung zum Erfassen der Identität einen RFID-Leser umfassen.

Wenn ein bestimmter Behälter eingelagert werden soll, so erfasst beispielsweise ein Bediener mit Hilfe eines Barcode-Lesers den auf dem Behälter aufgedruckten Barcode, woraufhin der Bediener den Behälter in eine Einlagerungsaufnahme, von der eine Transporteinrichtung zu dem Stapel der Lagerscheiben führt, oder eine Durchtrittsöffnung an einer Stirnseite des Stapels der Lagerscheiben einlegt. Die Steuereinrichtung treibt dann die Lagerscheiben und die drehbaren Platten der Begrenzungswände so an, dass ein Einlagerungspfad zu dem gewünschten Lagerplatz gebildet wird, in den der Behälter eingelagert werden soll. Die Steuereinrichtung erfasst die Position dieses Lagerplatzes (beispielsweise durch eine Identifikation der Lagerscheibe, des Rings der Lagerplätze und der Position des Lagerplatzes auf dem Ring relativ zu einer festen Referenzposition). Bei einer geeigneten Anordnung der freigegebenen Durchtrittsöffnungen und der Lagerscheiben ist es auch denkbar, dass gleichzeitig mehrere Behälter eingelagert werden können.

Zur Auslagerung steuert die Steuereinrichtung die Antriebe der Lagerscheiben und der drehbaren Platten der Begrenzungswände derart an, dass ein Auslagerungspfad zwischen dem Lagerplatz des auszulagernden Behälters und einer Stirnseite des Stapels gebildet wird. Beispielsweise fällt dann der auszulagernde Behälter nach unten aus dem Stapel heraus und wird dort von der Auffangeinrichtung 11 aufgefangen und zu einem Ausgabeplatz transportiert.

Im Rahmen des Erfindungsgedankens sind zahlreiche alternative Ausführungsformen denkbar. Beispielsweise können die Lagerscheiben von einer rechteckigen Gestalt sein, wobei sich die Bewegungslinien geradlinig parallel zu einer Außenkante der rechteckigen Scheibe erstrecken. Zusätzlich könnte ein zweiter Satz von Bewegungslinien rechtwinklig zu dem ersten Satz von Bewegungslinien verlaufen, sofern die Lagerscheibe in zwei zueinander rechtwinkligen Koordinaten bewegt werden kann. Durch Verschieben der Lagerscheiben relativ zueinander entlang der rechtwinkligen Koordinaten können beliebige Lagerplätze übereinander positioniert werden. Die Begrenzungswände zwischen den Lagerscheiben können eine oder mehrere Durchtrittsöffnungen aufweisen und können wiederum aus zwei zueinander rechtwinklig verschiebbaren Platten bestehen oder verschließbare Öffnungen aufweisen.

## Patentansprüche

1. Vorrichtung zum geordneten Lagern einer Vielzahl unterscheidbarer zylindrischer Behälter (2),
wobei die Vorrichtung einen Stapel von mehreren quer zu einer axialen Richtung (3) und in der axialen Richtung (3) benachbart angeordneten Lagerscheiben (1) mit parallelen Stirnebenen aufweist, wobei jede Lagerscheibe (1) eine Vielzahl von Lagerplätzen (4) aufweist, wobei jeder Lagerplatz (4) eine vorgegebene Lagerfläche zur Aufnahme jeweils eines Behälters (2) aufweist,
wobei die Lagerplätze (4) in jeder Lagerscheibe (1) in wenigstens eine Gruppe von Lagerplätzen aufgeteilt sind, wobei sämtliche Lagerplätze einer Gruppe die gleiche Lagerfläche aufweisen und entlang einer zu den Stirnebenen (15) parallelen Bewegungslinie (5A, 5B) benachbart angeordnet sind, wobei die Bewegungslinien (5A, 5B) sämtlicher Gruppen der Lagerscheibe (1) parallel verlaufen, wobei jede Lagerscheibe (1) derart parallel zu den Stirnebenen (15) bewegbar ist, dass die Lagerplätze (4) ihrer Gruppe(n) entlang der Bewegungslinie(n) (5A, 5B) verschoben werden, **dadurch gekennzeichnet, dass**
jede Lagerscheibe (1) an einer oder beiden Stirnebenen (15) von einer Begrenzungswand (6) begrenzt ist, wobei in der Begrenzungswand (6) wenigstens eine Durchtrittsöffnung (7) vorgesehen ist, die relativ zu der Lagerscheibe (1) so positioniert werden kann, dass ein Behälter (2) in der axialen Richtung (3) durch die Begrenzungswand (6) hindurch in einen an der Durchtrittsöffnung (7) positionierten Lagerplatz (4) einer Gruppe der Lagerscheibe (1) hineinbewegt oder aus einem an der Durchtrittsöffnung (7) positionierten Lagerplatz (4) einer Gruppe der Lagerscheibe (1) herausbewegt werden kann,
wobei die Lagerscheiben und die Durchtrittsöffnungen derart positioniert werden können, dass ein Einlagerungspfad und/oder ein Auslagerungspfad (14) gebildet wird, der sich von einer Stirnseite (8A, 8B) des Stapels durch wenigstens eine Durchtrittsöffnung (7) wenigstens einer Begrenzungswand (6) hindurch zu einem ausgewählten Lagerplatz (4) in einer beliebigen Gruppe einer beliebigen Lagerscheibe (1) beziehungsweise in umgekehrter Richtung erstreckt,
wobei die Vorrichtung eine Steuereinrichtung aufweist, die mit einer Einrichtung zum Erfassen der Identität eines einzulagernden Behälters (2) und mit Antrieben zum Bewegen der Lagerscheiben (1) und zum Positionieren der Durchtrittsöffnungen (7) der Begrenzungswände (6) derart gekoppelt ist, dass die Steuereinrichtung einerseits mit Hilfe einer entsprechenden Ansteuerung der Antriebe den Ein- bzw. den Auslagerungspfad (13, 14) vorgeben und andererseits erfassen und speichern kann, auf welchen Lagerplätzen (4) welche Behälter (2) gelagert sind, so dass durch eine von der Steuereinrichtung bewirkte Bildung des Ein- bzw. des Auslagerungspfads (13, 14) eine automatische Ein- bzw. Auslagerung eines Behälters (2) möglich ist.

2. Vorrichtung nach Anspruch 1, **dadurch gekennzeichnet,**
**dass** die Lagerscheiben (1) die Form eines flachen geraden Kreiszylinders oder eines Segment eines solchen Kreiszylinders haben und um die Achse (9) des Kreiszylinders drehbar oder schwenkbar sind,
**dass** sämtliche Lagerplätze (4) einer Gruppe entlang einer kreisförmigen, zur Zylinderachse konzentrischen Bewegungslinie (5A, 5B) benachbart angeordnet sind, so dass die Lagerplätze (4) der Gruppe zumindest einen Teilkreisbogen eines Rings belegen, und
**dass** in der Begrenzungswand (6) wenigstens eine verschließbare oder radial verschiebbare Durchtrittsöffnung (7) vorgesehen ist, durch welche ein Behälter (2) in axialer Richtung (3) in einen an der Durchtrittsöffnung (7) positionierten Lagerplatz der Lagerscheibe oder aus einem an der Durchtrittsöffnung positionierten Lagerplatz (4) der Lagerscheibe (1) bewegt werden kann.

3. Vorrichtung nach Anspruch 2, **dadurch gekennzeichnet, dass** die Lagerscheiben (1) die Form eines flachen geraden Kreiszylinders haben und eine Gruppe jeweils einen vollständigen Ring von Lagerplätzen umfasst, wobei jeweils mindestens ein bestimmter oder ein beliebiger Lagerplatz (4) als Durchtrittskanal frei bleibt.

4. Vorrichtung nach Anspruch 2 oder 3, **dadurch gekennzeichnet, dass** die Begrenzungswände (6) jeweils wenigstens zwei relativ zueinander um die Zylinderachse drehbare Platten umfassen, die jeweils wenigstens eine Durchtrittsöffnung (7A, 7B) mit gleichem radialen Abstand von der Zylinderachse aufweisen, so dass die wenigstens eine Durchtrittsöffnung (7) in der Begrenzungswand (6) verschließbar ist, indem die Platten relativ zueinander gedreht werden.

5. Vorrichtung nach Anspruch 4, **dadurch gekennzeichnet, dass** die Begrenzungswände (6) jeweils eine feststehende Platte und eine drehbare Platte umfassen, wobei jede feststehende Platte mit einer in einer radialen Linie (12) an den Schnittpunkten zu den Bewegungslinien (5A, 5B) angeordneten Reihe von Durchtrittsöffnungen (7A) und jede drehbare Platte mit einer Reihe von in Umfangsrichtung versetzt und an den Schnittpunkten zu den Bewegungslinien (5A, 5B) angeordneten Durchtrittsöffnungen (7B) versehen ist.

6. Vorrichtung nach einem der Ansprüche 1 - 5, **dadurch gekennzeichnet, dass** die axiale Richtung (3) die senkrechte Richtung ist, wobei jede Lagerscheibe (1) an der unteren Stirnebene (15) von einer Begrenzungswand (6) begrenzt ist, so dass die eingelagerten Behälter (2) auf der Begrenzungswand (6) aufliegen.

7. Vorrichtung nach Anspruch 6, **dadurch gekennzeichnet, dass** die Lagerscheiben (1) und die Begrenzungswände (6) so ausgebildet sind, dass ein aus einer Lagerscheibe (1) auszulagernder Behälter (2) nach dem Positionieren einer in der unter der Lagerscheibe angeordneten Begrenzungswand (6) angeordneten Durchtrittsöffnung (7) unter dem Lagerplatz des Behälters (2) schwerkraftgetrieben nach unten austritt und in einen Lagerplatz (4) einer darunter angeordneten Lagerscheibe (1) fällt oder aus dem Stapel nach unten austritt.

8. Vorrichtung nach Anspruch 6, **dadurch gekennzeichnet, dass** ein oder mehrere in axialer Richtung (3) bewegbare Stößel vorgesehen sind und die unter den Lagerscheiben (1) angeordneten Begrenzungswände (6) so ausgebildet sind, dass die Stößel hindurchtreten können, so dass ein aus einer Lagerscheibe auszulagernder Behälter (2) nach dem Positionieren einer in der über der Lagerscheibe angeordneten Begrenzungswand (6) angeordneten Durchtrittsöffnung (7) über dem Lagerplatz (4) des Behälters (2) von einem von unten herangefahrenen Stößel getrieben nach oben austritt und in einen Lagerplatz (4) einer darüber angeordneten Lagerscheibe (1) eintritt oder aus dem Stapel nach oben austritt.

9. Vorrichtung nach einem der Ansprüche 1 - 5, **dadurch gekennzeichnet, dass** die axiale Richtung (3) eine horizontale Richtung ist und jede Lagerscheibe (1) beidseitig von einer Begrenzungswand (6) begrenzt ist.

10. Vorrichtung nach Anspruch 9, **dadurch gekennzeichnet, dass** ein oder mehrere in horizontaler Richtung bewegbare Stößel vorgesehen sind, die an einer oder an beiden Stirnseiten (8A, 8B) des Stapels in den Stapel hineinbewegt werden können, und die neben den Lagerscheiben angeordneten Begrenzungswände so ausgebildet sind, dass die Stößel hindurchtreten können, so dass ein aus einem Lagerplatz einer Lagerscheibe auszulagernder Behälter nach dem Positionieren einer in einer neben der Lagerscheibe angeordneten Begrenzungswand angeordneten Durchtrittsöffnung neben dem Lagerplatz des Behälters von einem waagerecht bewegten Stößel getrieben horizontal austritt und in einen Lagerplatz einer daneben angeordneten Lagerscheibe eintritt oder aus dem Stapel austritt.

11. Vorrichtung nach Anspruch 8 oder 10, **dadurch gekennzeichnet, dass** die Stößel durch Öffnungen in den Begrenzungswänden hindurchtreten, deren Durchmesser kleiner als die der Behälter sind.

12. Vorrichtung nach einem der Ansprüche 1 - 5, **dadurch gekennzeichnet, dass** jeder Lagerplatz (4) von einer sich über die gesamte Dicke der Lagerscheibe (1) erstreckenden Wandung (10) umgeben ist, die den Lagerplatz (4) gegenüber benachbarten Lagerplätzen (4) abgrenzt.

13. Vorrichtung nach Anspruch 12, **dadurch gekennzeichnet, dass** die Wandungen (10) der Lagerplätze (4) derart geschlossen sind, dass sie einen axialen Strömungskanal für ein Gas bilden können, und die Begrenzungswände (6) dort, wo benachbart diejenigen Lagerplätze (4) positioniert werden, aus denen ein Behälter (2) ausgelagert oder in die ein Behälter eingelagert werden soll, Gasdurchtrittsöffnungen aufweisen, wobei die Gasdurchtrittsöffnungen kleiner als die Durchtrittsöffnungen (7) für die Behälter sind, so dass ein Gasstrom aus einem auf der einen Seite der Begrenzungswand (6) positionierten Lagerplatz (4) zu einem auf der anderen Seite positionierten Lagerplatz hindurchtreten kann, ohne dass ein gegebenenfalls enthaltener Behälter durchgelassen wird, wobei eine Vorrichtung zum Erzeugen eines Gasstroms an einer oder an beiden Stirnseiten (8A, 8B) des Stapels vorgesehen ist, so dass ein aus einem Lagerplatz einer Lagerscheibe auszulagernder Behälter nach dem Positionieren einer Behälter-Durchtrittsöffnung neben dem Lagerplatz des Behälters von einem Gasstrom getrieben austreten und in einen Lagerplatz einer daneben angeordneten Lagerscheibe eintreten oder aus dem Stapel austreten kann.

## Claims

1. Apparatus for the orderly storage of a plurality of distinguishable, cylindrical containers (2),
wherein the apparatus includes a stack of a plurality of storage plates (1), which are arranged transversely to an axial direction (3) and adjacent in the axial direction (3), with parallel end planes, wherein each storage plate (1) has a plurality of storage locations (4), wherein each storage location (4), affords a predetermined storage area for receiving a respective container (2),
wherein the storage locations (4) in each storage plate (1) are divided into at least one group of storage locations, wherein all the storage locations of a group have the same storage area and are arranged adjacent along a movement line (5A, 5B) parallel to the end planes (15), wherein the movement lines (5A, 5B) of all the groups of the storage plate (1) extend parallel to one another, wherein each storage plate (1) is movable parallel to the end planes (15) such that the storage locations (4) of their group(s) are moved along the movement line(s) (5A, 5B),
**characterised in that** each storage plate (1) is bounded at one or both end planes (15) by a boundary wall (6), wherein provided in the boundary wall (6) there is at least one opening (7), which can be so positioned relative to the storage plate (1) that a container (2) can be moved in the axial direction (3) through the boundary wall (6) into a storage location (4) located at the opening (7) of a group in the storage plate (1) or can be moved out of a storage location (4) positioned at the opening (7) of a group in the storage plate (1), wherein the storage plates and the openings can be so positioned that an insertion path and/or a removal path (14) is defined, which extends from one end plane (8A, 8B) of the stack through at least one opening (7) in at least one boundary wall (6) to a selected storage location (4) in any desired group of any desired storage plate or in the reverse direction,
wherein the apparatus includes a control device, which is coupled to a device for determining the identity of a container (2) to be placed into storage and to actuators for moving the storage plates (1) and for positioning the openings (7) in the boundary walls (6) such that the control device can, on the one hand, with the aid of appropriate control of the actuators, define the insertion or removal path (13,14) and, on the other hand, can determine and record on which storage plates (4) which containers (2) are stored so that automatic insertion into or removal from storage of a container (2) is possible by formation, effected by the control device, of the insertion or removal path (13,14).

2. Apparatus as claimed in claim 1, **characterised in that** the storage plates (1) have the shape of a flat, straight circular cylinder or of a segment of such a circular cylinder and are rotatable or pivotable about the axis (9) of the circular cylinder, that all the storage locations (4) of a group are arranged adjacent along a circular movement line (5A, 5B) concentric with the cylinder axis so that the storage locations (4) of the group occupy at least one arcuate circular portion of a ring and that provided in the boundary wall (6) there is at least one closable or radially movable opening (7), through which a container (2) can be moved in the axial direction (3) into a storage location, positioned at the opening (7), of the storage plate or out of a storage location (4), positioned at the opening, of the storage plate (1).

3. Apparatus as claimed in claim 2, **characterised in that** the storage plates (1) have the shape of a flat, straight circular cylinder and a group includes a respective complete ring of storage locations, wherein in each case at least one predetermined storage location (4) or any desired storage location (4) remains free as a movement passage.

4. Apparatus as claimed in claim 2 or 3, **characterised in that** the boundary walls (6) each include at least two plates, which are rotatable relative to one another about the cylinder axis and each have at least one opening (7A, 7B) with the same radial spacing from the cylinder axis so that the at least one opening (7) in the boundary wall (6) is closable by rotating the plates relative to one another.

5. Apparatus as claimed in claim 4, **characterised in that** the boundary walls (6) each include a fixed plate and a rotatable plate, wherein each fixed plate is provided with a row of openings (7A) arranged in a radial line (12) at the points of intersection with the movement lines (5A, 5B) and each rotatable plate is provided with a row of openings (7B) offset in the peripheral direction and arranged at the points of intersection with the movement lines (5A, 5B).

6. Apparatus as claimed in one of claims 1-5, **characterised in that** the axial direction (3) is the vertical direction, wherein each storage plate (1) is bounded at the lower end plane (15) by a boundary wall (6) so that the containers (2) inserted into storage rest on the boundary wall (6).

7. Apparatus as claimed in claim 6, **characterised in that** the storage plates (1) and the boundary walls (6) are so constructed that a container (2) which is to be removed from storage from a storage plate (1), after the positioning of an opening arranged in the boundary wall (6) disposed below the storage plate beneath the storage location of the container (2), exits downwardly under the action of gravity and falls into a storage location (4) of a storage plate (1) arranged beneath it or leaves the stack downwardly.

8. Apparatus as claimed in claim 6, **characterised in that** one or more pushers, which are movable in the axial direction (3), are provided and the boundary walls (6) disposed below the storage plates (1) are so constructed that the pushers can pass through so that a container (2) which is to be removed from storage from a storage plate (2), after the positioning above the storage location (4) of an opening (7) arranged in the boundary wall (6) disposed above the storage plate, exits upwardly driven by a pusher advanced from below and exits into a storage location (4) of a storage plate (1) arranged above it or leaves the stack upwardly.

9. Apparatus as claimed in one of claims 1-5, **characterised in that** the axial direction (3) is a horizontal direction and each storage plate (1) is bounded on both sides by a boundary wall (6).

10. Apparatus as claimed in claim 9, **characterised in that** one or more pushers, which are movable in the horizontal direction, are provided, which can be moved into the stack at one or both end faces (8A, 8B) of the stack and the boundary walls (6) disposed adjacent the storage plates (1) are so constructed that the pushers can pass through so that a container to be removed from a storage location (4) of a storage plate (1), after positioning of an opening, arranged in a boundary wall (6) disposed adjacent the storage plate (1) adjacent to the storage plate of the container, exits horizontally driven by a horizontally moved pusher and enters a storage location (4) of a storage plate (1) arranged adjacent to it or leaves the stack.

11. Apparatus as claimed in claim 8 or 10, **characterised in that** the pushers pass through openings in the boundary walls (6) whose diameter is smaller than those of the containers.

12. Apparatus as claimed in one of claims 1-5, **characterised in that** each storage location (4) is surrounded by a wall (10), which extends over the entire thickness of the storage plate (1) and defines the storage location (4) with respect to adjacent storage locations (4).

13. Apparatus as claimed in claim 12, **characterised in that** the walls (10) of the storage locations (4) are closed such that they can define an axial flow passage for a gas and the boundary walls (6) afford gas flow openings at locations adjacent to those storage locations (4), from which a container (2) is to be removed from storage or into which a container is to be inserted into storage, wherein the gas flow openings are smaller than the openings (7) for the containers so that a gas current can flow from a storage location (4) positioned on the one side of the boundary wall (6) to a storage location positioned on the other side without a container (2) which is potentially contained being let through, wherein a device for producing a gas flow is provided at one or at both end faces (8A, 8B) of the stack so that a container which is to be removed from storage from a storage location (4) of a storage plate (1), after the positioning of a container opening adj acent to the storage location of the container (2), can exit, driven by a gas flow, and can enter into a storage location (4) of a storage plate (1) arranged adjacent to it or can leave the stack.

## Revendications

1. Dispositif pour stocker de manière ordonnée une pluralité de récipients cylindriques distinguables (2)
dans lequel le dispositif présente un empilement de plusieurs disques de stockage (1) aménagés au voisinage l'un de l'autre transversalement à une direction axiale (3) et dans la direction axiale (3) avec des plans frontaux parallèles, dans lequel chaque disque de stockage (1) comporte une pluralité d'emplacements de stockage (4), dans lequel chaque emplacement de stockage (4) présente une surface de stockage prédéterminée pour recevoir respectivement un récipient (2),
dans lequel les emplacements de stockage (4) de chaque disque de stockage (1) sont divisés au moins en un groupe d'emplacements de stockage, dans lequel tous les emplacements de stockage d'un groupe présentent la même surface de stockage et sont aménagés au voisinage l'un de l'autre le long d'une ligne de déplacement (5a, 5B) parallèle aux plans frontaux (15), dans lequel les lignes de déplacement (5a, 5B) de tous les groupes du disque de stockage (1) s'étendent parallèlement, chaque disque de stockage (1) pouvant être déplacé parallèlement aux plans frontaux (15), de sorte que les emplacements de stockage (4) de leur(s) groupe(s) soient déplacés le long de la ou des lignes de déplacement (5a, 5B),
**caractérisé en ce que** chaque disque de stockage (1) est délimité par une paroi de délimitation (6) sur l'un ou les deux plans frontaux (15), dans lequel il est prévu dans la paroi de délimitation (6) au moins une ouverture de passage (7), qui peut être positionnée par rapport au disque de stockage (1) de sorte qu'un récipient (2) puisse être déplacé, en traversant la paroi de délimitation (6) selon la direction axiale (3), pour aller dans un emplacement de stockage (4), positionné sur l'ouverture de passage (7), d'un groupe du disque de stockage (1) ou pour sortir d'un emplacement de stockage (4), positionné sur l'ouverture de passage (7), d'un groupe du disque de stockage (1),
dans lequel les disques de stockage et les ouvertures de passage peuvent être positionnés de manière à former un trajet de stockage et/ou un trajet de déstockage (14), qui s'étend d'un côté frontal (8A, 8B) de l'empilement à travers au moins une ouverture de passage (7) d'au moins une paroi de délimitation (6) jusqu'à un emplacement de stockage choisi (4) dans un groupe quelconque d'un disque de stockage (1) quelconque ou en sens inverse,
dans lequel le dispositif présente un dispositif de commande qui est couplé à un dispositif permettant d'enregistrer l'identité d'un récipient (2) que l'on souhaite stocker et à des organes de commandes pour déplacer les disques de stockage (1) et pour positionner les ouvertures de passage (7) des parois de délimitation (6) de sorte que le dispositif de commande puisse, d'une part, à l'aide d'une commande correspondante des organes de commandes, prédéfinir le trajet de stockage ou de déstockage (13, 14) et, d'autre part, enregistrer et mémoriser quels récipients (2) ont été stockés sur quels emplacements de stockage (4), afin qu'il soit possible, via l'établissement d'un trajet de stockage ou de déstockage (13, 14) produit par le dispositif de commande, de stocker ou de déstocker automatiquement un récipient (2).

2. Dispositif selon la revendication 1, **caractérisé en ce que**
les disques de stockage (1) ont la forme d'un cylindre à base circulaire, droit et plat, ou d'un segment d'un tel cylindre circulaire et peuvent pivoter ou être orientés autour de l'axe (9) du cylindre à base circulaire,
tous les emplacements de stockage (4) d'un groupe sont aménagés au voisinage l'un de l'autre le long d'une ligne de déplacement (5A, 5B) de forme circulaire et concentrique à l'axe du cylindre, de sorte que les emplacements de stockage (4) du groupe occupent au moins un arc partiel de cercle, et
dans la paroi de délimitation (6), il est prévu au moins une ouverture de passage (7) pouvant être fermée ou pouvant coulisser radialement, par laquelle un récipient (2) peut être déplacé dans la direction axiale (3) pour entrer dans un emplacement de stockage, positionné sur l'ouverture de passage (7), du disque de stockage, ou pour sortir d'un emplacement de stockage (4), positionné sur l'ouverture de passage, du disque de stockage (1).

3. Dispositif selon la revendication 2, **caractérisé en ce que** les disques de stockage (1) ont la forme d'un cylindre à base circulaire, droit et plat, et **en ce qu'**un groupe comprend, respectivement, un anneau complet d'emplacements de stockage, dans lequel, respectivement, au moins un emplacement de stockage (4) déterminé ou quelconque reste libre comme canal de passage.

4. Dispositif selon la revendication 2 ou 3, **caractérisé en ce que** les parois de délimitation (6) comprennent, respectivement, au moins deux plaques rotatives qui peuvent tourner l'une par rapport à l'autre autour de l'axe du cylindre, lesquelles présentent, respectivement, au moins une ouverture de passage (7A, 7B) à une distance radiale identique de l'axe du cylindre, de sorte que la au moins une ouverture de passage (7) de la paroi de délimitation (6) puisse être fermée en faisant tourner les plaques l'une par rapport à l'autre.

5. Dispositif selon la revendication 4, **caractérisé en ce que** les parois de délimitation (6) comprennent, respectivement, une plaque fixe et une plaque rotative, dans lequel chaque plaque fixe est pourvue d'une série d'ouvertures de passage (7A) aménagées sur une ligne radiale (12) au niveau du point de croisement avec les lignes de déplacement (5A, 5B) et chaque plaque rotative est pourvue d'une série d'ouvertures de passage (7B) décalées dans la direction périphérique et aménagées au niveau du point de croisement avec les lignes de déplacement (5A, 5B).

6. Dispositif selon l'une quelconque des revendications 1 à 5, **caractérisé en ce que** la direction axiale (3) est la direction verticale, dans lequel chaque disque de stockage (1) est délimité sur le plan frontal inférieur (15) par une paroi de délimitation (6), de sorte que les récipients stockés (2) reposent sur la paroi de délimitation (6).

7. Dispositif selon la revendication 6, **caractérisé en ce que** les disques de stockage (1) et les parois de délimitation (6) se présentent sous une forme telle qu'un récipient (2) que l'on souhaite déstocker d'un disque de stockage (1) sorte par le bas sous l'action de l'apesanteur après qu'une ouverture de passage (7), aménagée dans la paroi de délimitation (6) aménagée sous le disque de stockage, a été positionnée sous l'emplacement de stockage du récipient (2), et tombe dans un emplacement de stockage (4) d'un disque de stockage (1) aménagé en dessous ou sorte de l'empilement vers le bas.

8. Dispositif selon la revendication 6, **caractérisé en ce qu'**il est prévu un ou plusieurs poussoirs déplaçables dans la direction axiale (3) et **en ce que** les parois de délimitation (6) aménagées en dessous des disques de stockage (1) sont conformées de manière que les poussoirs puissent y pénétrer, afin qu'un récipient (2) que l'on souhaite déstocker d'un disque de stockage sorte par le haut, après qu'une ouverture de passage (7) aménagée dans la paroi de délimitation (6) aménagée au-dessus du disque de stockage a été positionnée au-dessus de l'emplacement de stockage (4) du récipient (2), sous l'action d'un poussoir entraîné par le bas, et entre dans un emplacement de stockage (4) d'un disque de stockage (1) aménagé par-dessus ou sorte de l'empilement vers le haut.

9. Dispositif selon l'une quelconque des revendications 1 à 5, **caractérisé en ce que** la direction axiale (3) est une direction horizontale et chaque disque de stockage (1) est délimité des deux côtés par une paroi de délimitation (6).

10. Dispositif selon la revendication 9, **caractérisé en ce qu'**il est prévu un ou plusieurs poussoirs déplaçables dans la direction horizontale, lesquels poussoirs sont déplacés vers l'intérieur de l'empilement au niveau de l'un ou des deux côtés frontaux (8A, 8B) de l'empilement et **en ce que** les parois de délimitation aménagées à côté des disques de stockage sont conformées de manière que les poussoirs puissent y pénétrer, afin qu'un récipient que l'on souhaite déstocker d'un emplacement de stockage d'un disque de stockage sorte horizontalement, après qu'une ouverture de passage aménagée dans la paroi de délimitation aménagée à côté du disque de stockage a été positionnée à côté de l'emplacement de stockage du récipient, sous l'action d'un poussoir entraîné horizontalement, et entre dans un emplacement de stockage d'un disque de stockage aménagé à côté ou sorte de l'empilement.

11. Dispositif selon la revendication 8 ou 10, **caractérisé en ce que** les poussoirs passent à travers des ouvertures dans les parois de délimitation, dont le diamètre est plus petit que celui du récipient.

12. Dispositif selon l'une quelconque des revendications 1 à 5, **caractérisé en ce que** chaque emplacement de stockage (4) est entouré par une paroi (10) s'étendant sur toute l'épaisseur du disque de stockage (1), ladite paroi délimitant l'emplacement de stockage (4) par rapport aux emplacements de stockage voisins.

13. Dispositif selon la revendication 12, **caractérisé en ce que** les parois (10) des emplacements de stockage (4) sont fermés de sorte qu'ils puissent former un canal d'écoulement axial pour un gaz, et **en ce que** les parois de délimitation (6) présentent, là où sont positionnés des emplacements de stockage (4) voisins de celles-ci et à partir desquels un récipient (2) doit être déstocké ou dans lesquels un récipient doit être stocké, des ouvertures de passage de gaz, dans lequel les ouvertures de passage de gaz sont plus petites que les ouvertures de passage (7) pour les récipients, de sorte qu'un courant de gaz puisse traverser depuis un emplacement de stockage (4) positionné sur un côté de la paroi de délimitation (6) vers un emplacement de stockage positionné sur l'autre côté, sans qu'un récipient éventuellement présent ne soit autorisé à passer, dans lequel un dispositif permettant de produire un courant de gaz sur un ou sur les deux côtés (8A, 8B) de l'empilement est prévu de manière qu'un récipient que l'on souhaite déstocker d'un emplacement de stockage d'un disque de stockage puisse sortir, après qu'une ouverture de passage de récipient a été positionnée à côté de l'emplacement de stockage du récipient, sous l'effet d'un courant de gaz, et puisse entrer dans un emplacement de stockage d'un disque de stockage aménagé à côté, ou puisse sortir de l'empilement.
